(19) Europäisches Patentamt
European Patent Office
Office européen des brevets

(11) **EP 3 196 721 B1**

(12) **EUROPEAN PATENT SPECIFICATION**

(45) Date of publication and mention
of the grant of the patent:
**31.07.2019 Bulletin 2019/31**

(51) Int Cl.:
***G05B 19/404*** *(2006.01)*          ***B23Q 15/14*** *(2006.01)*
***B23Q 17/09*** *(2006.01)*

(21) Application number: **17152330.1**

(22) Date of filing: **20.01.2017**

(54) **TURNING METHOD FOR SUPPRESSING CHATTER VIBRATION AND MACHINE TOOL**

DREHVERFAHREN ZUR UNTERDRÜCKUNG VON RATTERSCHWINGUNGEN UND
WERKZEUGMASCHINE

PROCÉDÉ DE TOURNAGE POUR SUPPRIMER LES VIBRATIONS DE BROUTEMENT ET
MACHINE-OUTIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.01.2016 JP 2016009268
22.02.2016 JP 2016031216**

(43) Date of publication of application:
**26.07.2017 Bulletin 2017/30**

(73) Proprietors:
• **Nakamura-Tome Precision Industry Co., Ltd
Hakusan, Ishikawa 920-2195 (JP)**
• **Keio University
Tokyo 108-8345 (JP)**
• **National University Corporation Nagoya
University
Aichi 464-8601 (JP)**

(72) Inventors:
• **NAKANISHI, Ken-ichi
Hakusan, Ishikawa 920-2195 (JP)**
• **KAKINUMA, Yasuhiro
Yokohama-shi, Kanagawa 223-8522 (JP)**
• **SUZUKI, Norikazu
Chikusa-ku, Nagoya, 464-8601 (JP)**

(74) Representative: **Wunderlich & Heim
Patentanwälte
Partnerschaftsgesellschaft mbB
Irmgardstrasse 3
81479 München (DE)**

(56) References cited:
DE-A1-102009 050 993     DE-T5-112012 000 332
US-A- 4 047 469          US-A- 4 417 489
US-A- 5 270 941          US-A1- 2006 271 231

## Description

### TECHNICAL FIELD

The present invention relates to a turning method that reduces or suppresses the occurrence of a chatter vibration, and a machine tool using the same.

### BACKGROUND ART

When a long workpiece is turned in a state in which one end of the workpiece is held by the main spindle of a lathe, for example, the working accuracy may decrease, or a chatter vibration may occur, due to a decrease in the rigidity in the radial direction.

A method that supports the center part of the end of the workpiece using a tail means, or a method that supports the side of the workpiece using a support means such as a roller guide, has been used to suppress the occurrence of a chatter vibration.

However, these methods have a problem in that it may be difficult to turn the workpiece so as to have the desired shape, or it may be necessary to use a special center support mechanism or a side guide mechanism, for example. US 5 270 941 discloses a turning apparatus with two cutting tools that are arranged offset with respect to a axial centre line of the workpiece.

DE 11 2012 000332 T5 teaches a turning apparatus with a cutting tool that is swingable about an axis with respect to the workpiece.

JP-A-2014-79867 discloses a method that reduces or suppresses a chatter vibration by calculating the change amplitude and the change cycle when changing the rotational speed using the moment of inertia and the like, and controlling a change in rotational speed based on the calculated change amplitude and change cycle.

Specifically, the turning method disclosed in JP-A-2014-79867 aims to control a change in the rotational speed of the workpiece.

JP-A-2014-195856 discloses a turning method that places a rough turning chip and a finish turning chip so that the edges are shifted by 180°.

However, the turning method disclosed in JP-A-2014-195856 has a problem in that the turning stability decreases, and the method cannot be applied to a workpiece having low rigidity.

### SUMMARY OF THE INVENTION

### Technical Problem

An object of the invention is to provide a turning method that can easily reduce or suppress the occurrence of a chatter vibration during turning, and achieve high productivity, and a machine tool using the same.

### Solution to Problems

The above problem is solved with a turning method according to claim 1 and a machine tool according to claim 6.

The dependent claims 2-5 and 7-8 define further features.

It is considered that a regenerative chatter vibration that occurs at each edge (corner) is canceled, and the occurrence of a chatter vibration can be suppressed, by shifting the arrangement of the first edge of the first cutting tool and the second edge of the second cutting tool around the rotation center axis with respect to the arrangement in which the first edge of the first cutting tool and the second edge of the second cutting tool are situated opposite to each other at an angle of 180°.

The rotatable main spindle is not particularly limited. The rotatable main spindle may be controlled with respect to the rotational speed, or may be open-loop controlled, for example.

In the method of claim 2, it is preferable to offset the edge so that the clearance angle of the edge does not become lower than a given angle.

The given angle is a critical angle at which the rake angle can be increased without causing abnormal tool abrasion or edge force. The given angle is set within a range from more than 0° to 7°.

The given angle is preferably set within a range from more than 0° to 3°.

The configuration of the setting means that sets the cutting tool is not limited as long as the cut depth of the edge with respect to the workpiece, the feed rate in the feed direction, and the movement around the rotation center axis within a given angle range can be controlled.

For example, a turning device that includes a turret lathe and a multi-axially controlled tool post may be used.

When turrets that are placed opposite to each other are used, a case where the positions of the turrets in the feed direction are set to completely coincide with each other, and a case where the positions of the turrets in the feed direction are set to differ from each other, are intended to be included within the scope of the invention.

A case where two edges opposite to each other are placed at an unequal pitch by adjusting the angle of the cutting tool provided to a tool post, and the like are also intended to be included within the scope of the invention.

A case where one end of the workpiece is held by the main spindle, and the other end of the workpiece is supported by a tail stock or a center support is also intended to be included within the scope of the invention.

Advantageous Effects of Invention

A known configuration in which the edges of two cutting tools are situated opposite to each other at an angle of 180° around the rotation center axis has advantages in that the turning efficiency can be doubled since the workpiece is turned by the upper and lower cutting tools at the same time, and a situation in which the workpiece undergoes static deflection can be theoretically suppressed since the turning forces that occur at the upper and lower turning points are balanced. However, such a known configuration has a problem in that stability with respect to a chatter vibration is low.

According to the invention, it is possible to easily suppress the occurrence of a chatter vibration by implementing unequal pitch turning that is performed in a state in which the edge of one of the cutting tools is shifted by a given offset angle $\varphi_1$ with respect to an unequal pitch (e.g., the edges of two cutting tools are situated opposite to each other at an angle of 180°) so that an optimum pitch angle difference $\Delta\theta$ is obtained, or swing turning that is performed while swinging the edge of the cutting tool around the rotation center axis by a given swing angle $\Delta\varphi$.

Note that unequal pitch turning and swing turning differ as to the mechanism that reduces or suppresses a chatter vibration, but have the same effect in that stable turning can be implemented.

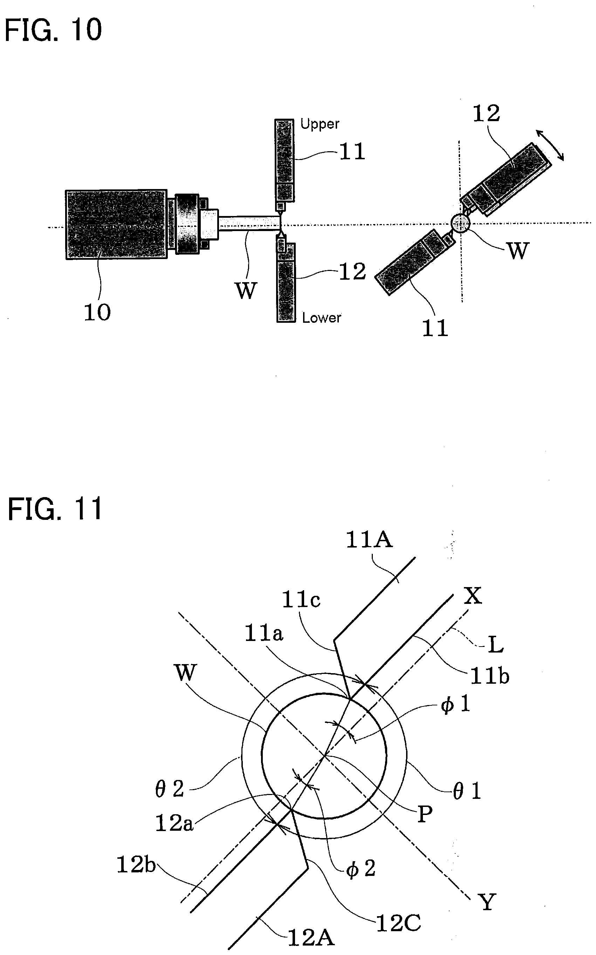

The details of the pitch angle difference and the offset angle are illustrated in FIG. 11.

Since the machine tool according to the invention that is suitable for implementing the turning method according to the invention includes the detection means that detects a chatter vibration, the determination means that determines whether or not a chatter vibration has occurred, and the calculation means that calculates an optimum pitch angle difference $\Delta\theta$ based on the frequency of the chatter vibration, or the calculation means that calculates an optimum swing angle $\Delta\varphi$, the machine tool can reduce or suppresses the occurrence of a chatter vibration, and achieve high productivity.

The invention can be applied when turning (producing) various products that differ in shape while reducing or suppressing the occurrence of a chatter vibration during turning.

In particular, the invention can suitably be applied when turning a workpiece having a L/D ratio (D: diameter, L: length) of 6 or more.

BRIEF DESCRIPTION OF THE DRAWINGS

FIG. 1 is a schematic view illustrating unequal pitch turning.
FIG. 2A is a schematic view illustrating unequal pitch turning, FIG. 2B illustrates an example in which unequal pitch turning is combined with swing turning, and FIG. 2C illustrates an example in which the upper edge and the lower edge are swung.
FIG. 3 illustrates an exemplary control flowchart with regard to a machine tool according to one embodiment of the invention.
FIG. 4 illustrates the conditions employed when performing the first experiment.
FIGS. 5A to 5D illustrate the measurement results for the amount of convexities and concavities on the turned surface when $\varphi=0°$.
FIGS. 6A and 6B illustrate the measurement results for the amount of convexities and concavities on the turned surface when $\varphi=15°$.
FIGS. 7A and 7B illustrate the measurement results for the amount of convexities and concavities on the turned surface when $\varphi=30°$.
FIGS. 8A and 8B illustrate the conditions employed when performing the second experiment.
FIG. 9 illustrates the results (turning results) obtained by the second experiment.
FIG. 10 illustrates the conditions employed when performing the swing turning experiment (third experiment).
FIG. 11 illustrates the definitions of the pitch angle difference $\Delta\theta$ and the offset angle $\varphi$.
FIGS. 12A and 12B illustrate the relationship between the cutting direction and the feed direction.
FIG. 13 illustrates a modification of unequal pitch turning.

DESCRIPTION OF EMBODIMENTS

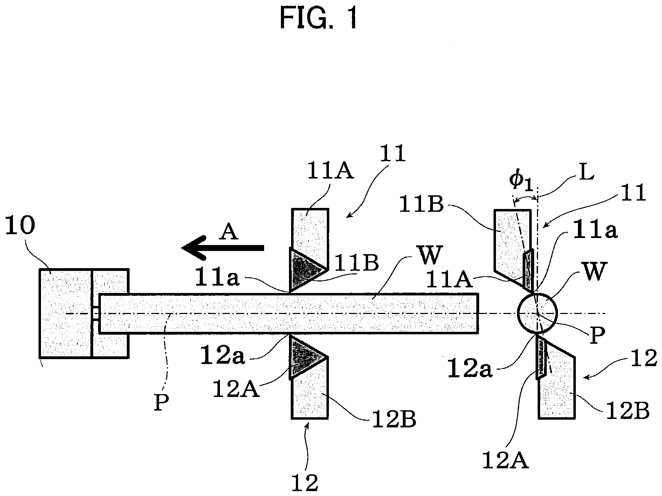

A turning method according to the exemplary embodiments of the invention is described below. FIG. 1 is a schematic view illustrating unequal pitch turning.

One end of a workpiece W is chucked by a main spindle 10, and the main spindle 10 is rotated.

A first cutting tool 11 includes a chip 11A and a shank 11B. A second cutting tool 12 includes a chip 12A and a shank 12B. The workpiece W is turned from each side using the first cutting tool 11 and the second cutting tool 12 in a state in which a first edge (also referred to as "corner" or "nose") 11a of the first cutting tool 11 and a second edge 12a of the second cutting tool 12 are situated opposite to each other at an angle of 180°, and the first edge 11a is offset by an offset angle $\varphi_1$ around a rotation center axis P with respect to a reference line L that connects the first edge 11a and the second edge 12a. Note that the direction X illustrated in FIG. 1 is a feed direction.

The offset angles $\varphi_1$ and $\varphi_2$ and the pitch angle difference $\Delta\theta$ illustrated in FIG. 11 are described below. The rotation center axis P and the reference line L of the workpiece W are also illustrated in FIG. 11. In FIG. 11, the first edge 11a is shifted by the bias angle $\varphi_1$ with respect to the reference line L, and the second edge 12a is shifted by the bias angle $\varphi_2$ with respect to the reference line L.

As illustrated in FIG. 11, a pitch angle $\theta_1$ of the first cutting tool 11 is defined to be the angle around the rotation center axis P from a reference plane 12b of the second cutting tool 12 to a reference plane 11b of the first cutting tool 11. Likewise, a pitch angle $\theta_2$ of the second cutting tool 12 is defined to be the angle around the rotation center axis P from the reference plane 11b of the first cutting tool 11 to the reference plane 12b of the second cutting tool 12.

In one embodiment of the invention, $\theta_1 \neq 180°$ and $\theta_2 \neq 180°$ since the bias angles $\varphi_1$ and $\varphi_2$ are used. Note that only one of the bias angles $\varphi_1$ and $\varphi_2$ may be used. Since $\varphi_1 \neq 0°$ and $\varphi_1 \neq \varphi_2$, $\theta_1 \neq \theta_2$ (i.e., unequal pitch), and the pitch angle difference $\Delta\theta = \theta_1 - \theta_2 \neq 0°$.

The chip 11A of the first cutting tool 11 has a major flank 11b and a minor flank 11c that intersect each other at the edge 11a. Likewise, the chip 12A of the second cutting tool 12 has a major flank 12b and a minor flank 12c that intersect each other at the edge 12a. Although FIG. 11 illustrates an example in which the reference plane is the major flank 11b or 12b, the reference plane may be the minor flank 11c or 12c.

An optimum offset angle $\varphi_1$ may be determined using the pitch angle difference $\Delta\theta$ calculated using the following expression (1).

$$\Delta\theta = 2\pi\left(m + \frac{1}{2}\right)\frac{n}{60f_c} \qquad \cdots (1)$$

Note that n is the rotational speed of the main spindle, fc is the frequency of a chatter vibration, and m is 0, 1, 2, 3, ....

It is preferable that m be 0.

An optimum offset angle $\varphi_1$ differs depending on the rigidity of the workpiece, and the turning conditions. The offset angle $\varphi_1$ is preferablhy within a range from $(1/4) \times \Delta\theta$ to $(3/4) \times \Delta\theta$ with respect to the pitch angle difference $\Delta\theta$ calculated using the expression (1). The offset angle $\varphi_2$ illustrated in FIG. 11 can be calculated in the same manner as the offset angle $\varphi_1$, provided that $\varphi_2 \neq \varphi_1$.

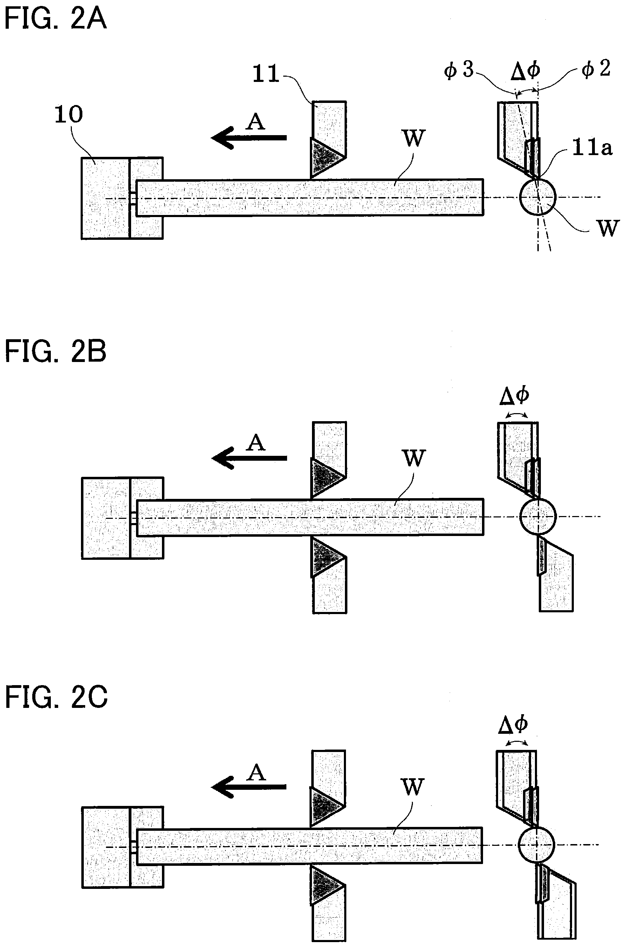

Although FIG. 1 illustrates an example in which the outer periphery of the workpiece W is turned, the working method is not limited. For example, the end face of the workpiece W may be turned, or the workpiece W may be tapered. FIG. 2A is a schematic view illustrating swing turning.

One end of the workpiece W is chucked by the main spindle 10, and the main spindle 10 is rotated.

The workpiece W is turned while swinging the edge 11a of the first cutting tool 11 by a swing angle $\Delta\varphi$ between given offset angles $\varphi_2$ and $\varphi_3$ around the rotation center axis P of the workpiece W in a given cycle (e.g., 20 Hz). Note that the first cutting tool 11 may be moved in an arbitrary way as long as the edge 11a of the first cutting tool 11 is swung around the rotation center axis P.

The cycle may be set to a very low frequency (e.g.,1 Hz or less), for example.

The offset angle $\varphi_2$ may be set to 0°.

An optimum swing angle $\Delta\varphi$ differs depending on the turning conditions.

FIGS. 2B and 2C illustrate an example in which unequal pitch turning and swing turning (see FIGS. 1 and 2A) are performed in combination using the first cutting tool 11 and the second cutting tool 12 illustrated in FIG. 1.

FIG. 2B illustrates an example in which only the edge 11a of the first cutting tool 11 is swung, and FIG. 2C illustrates an example in which both the edge 11a of the first cutting tool 11 and the second edge 12a of the second cutting tool 12 are swung.

Although FIGS. 2A to 2C illustrate an example in which the outer periphery of the workpiece W is turned, the end face of the workpiece W may be turned, or the workpiece W may be tapered, for example.

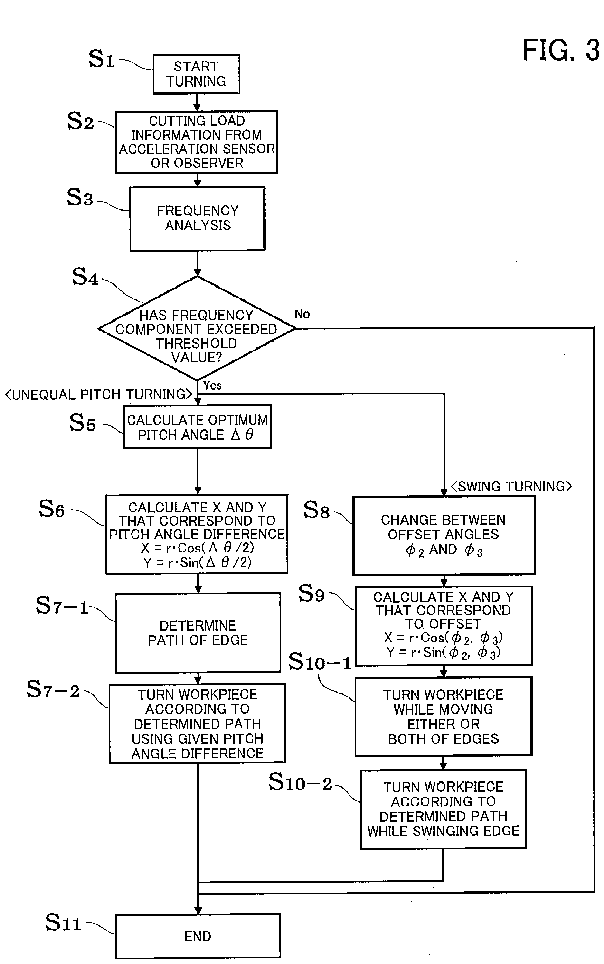

FIG. 3 illustrates an exemplary flowchart with regard to a control system of a machine tool according to one embodiment of the invention.

When a turning start instruction has been issued (step $S_1$), the workpiece W is turned in a state in which the occurrence of a vibration or the cutting load can be detected (monitored) by a detection means using an external sensor (e.g., acceleration sensor) and a disturbance observer (observer) (step $S_2$).

Note that the disturbance observer estimates a disturbance with respect to a driving means that rotates the supported workpiece W based on a current reference signal input to the driving means that rotates the supported workpiece W, or a tool post driving means, and an angle/position detection signal output from the driving means.

More specifically, the disclosure of JP-A-2010-271880 (proposed by some of the inventors of the present application) may be applied.

In this case, the frequency component (e.g., acceleration and cutting load) is analyzed by a frequency analysis process that uses a calculation means (e.g., FFT) (step $S_3$). When it has been determined that the frequency component has exceeded a given threshold value using a determination means that determines whether or not a chatter vibration has occurred (YES in step $S_4$), the signal is detected by a detection means that detects the occurrence of a chatter vibration, and the chatter frequency fc (frequency of the chatter vibration) is determined.

For example, the chatter frequency fc can be calculated using the following expression (2).

$$f_c = \frac{\lambda^2}{2\pi\ell^2}\sqrt{\frac{EI}{A\rho}} \qquad \cdots (2)$$

Note that E is Young's modulus, I is the cross-sectional second-order moment, A is the cross-sectional area, $\rho$ is the density, $\lambda$ is a constant, and 1 is the length.

When the frequency fc of the chatter vibration has been determined, the offset angle $\varphi_1$ or the swing angle $\Delta\varphi$ can be set by referring to the pitch angle difference $\Delta\theta$ that is calculated using the expression (1) based on the remaining turning conditions.

When it has been determined that the frequency component has exceeded the given threshold value (YES in step $S_4$), and unequal pitch turning is performed, steps $S_5$ to $S_{7-2}$ are performed. When swing turning is performed, steps Sg to $S_{10-2}$ are performed. When these steps have been completed, the process is terminated (step $S_{11}$).

Note that X and Y in FIG. 3 (see the steps $S_6$ and $S_9$) refer to the moving amounts of the first cutting tool 11 and the second cutting tool 12 when moved by a movement control means in the direction X and the direction Y (that are orthogonal to each other) illustrated in FIG. 11, and r is the radius of the workpiece W. The step $S_6$ illustrated in FIG. 3 is performed on the assumption that $\varphi_1 = \Delta\theta/2$.

The experimental results are described below.

In a first experiment, unequal pitch turning as illustrated in FIG. 1 was performed.

An aluminum alloy round bar having a diameter of 33 mm and a length of 200 mm was used as the workpiece W.

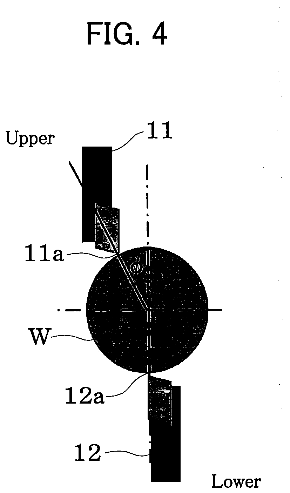

The first cutting tool 11 and the second cutting tool 11 and 12 (cemented carbide tips) are respectively attached to a turret disposed on the upper side a turret disposed on the lower side, and the workpiece W was turned under the conditions illustrated in FIG. 4.

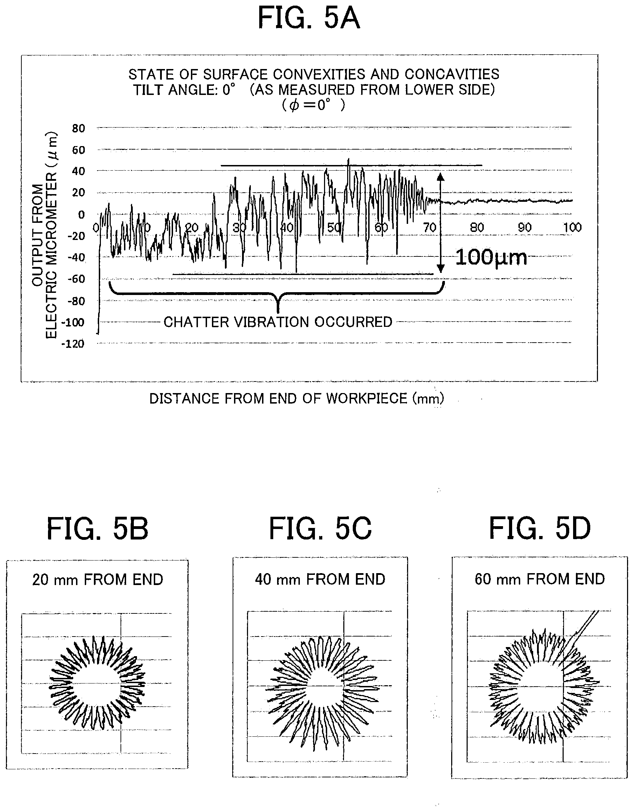

Specifically, the workpiece W was turned while setting the offset angle $\varphi$ of the edge 11a with respect to the reference line L (see FIG. 4) to 0°, 15°, and 30°, and the amount of convexities and concavities on the turned surface was measured in the feed direction and the circumferential direction. The results are illustrated in FIGS. 5A to 5D, 6A, 6B, 7A, and 7B.

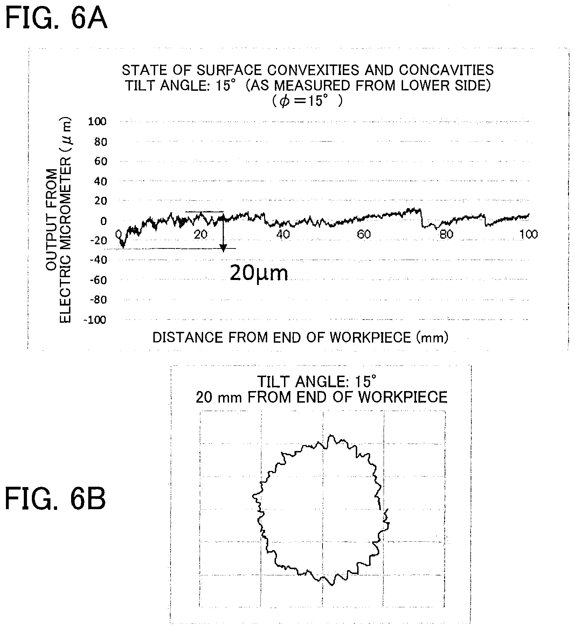

When $\varphi = 0°$, a significant chatter vibration occurred (see FIGS. 5A to 5D). When $\varphi = 15°$, no chatter vibration occurred (see FIGS. 6A and 6B).

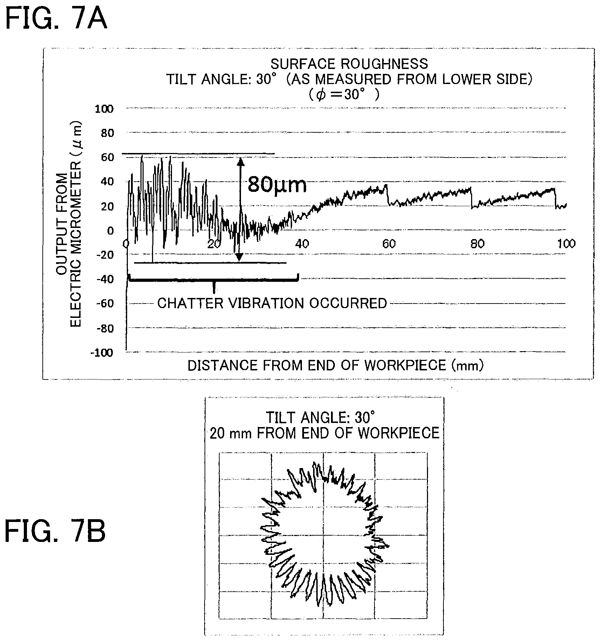

When $\varphi = 30°$, the amount of convexities and concavities was reduced as compared with the case where $\varphi = 0°$ (see FIGS. 7A and 7B).

Note that the frequency of the chatter vibration was measured to be 516 Hz.

It was thus confirmed that the turning method according to the embodiments of the invention is effective for reducing or suppressing the occurrence of a chatter vibration.

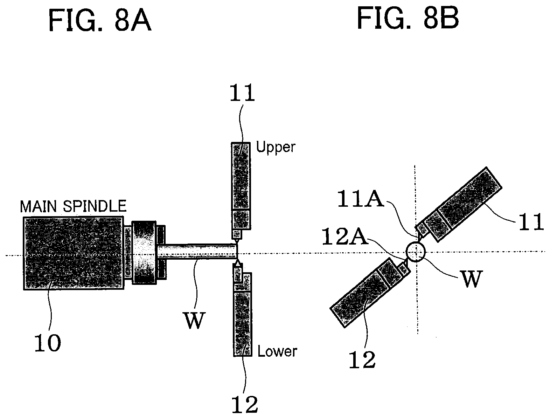

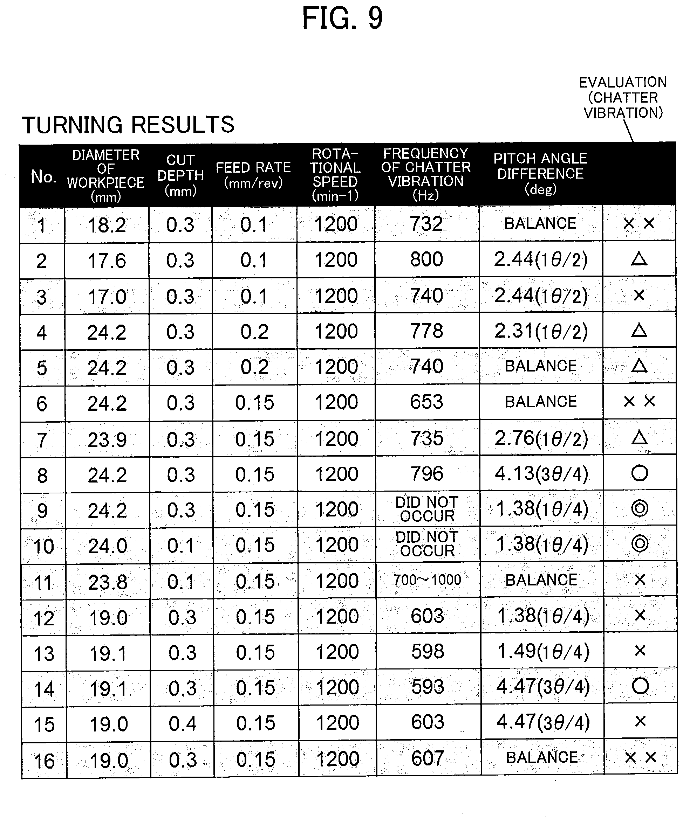

A second experiment was performed under the conditions described below (see FIGS. 8A and 8B). The workpiece W had a diameter of 25 mm and a length of 150 mm, and made of SUS303. The workpiece W was supported so as to protrude from the chuck of the main spindle 10 to a length of 130 mm, and the workpiece W was turned up to 100 mm from the end. In FIG. 8B, the clearance angle and the cutting angle of the chips 11A and 12A were set to 5° and 80°, respectively. An acceleration pickup was attached to the back side of the first cutting tool 11. In the second experiment, the parameters were set as illustrated in FIG. 9.

PCLNR2020 manufactured by Tungaloy Corporation was used as the first second cutting tool 11 and the second cutting tool 12, and CNMM was used as the chips 11A and 12B.

The results of the second experiment are listed in FIG. 9.

In FIG. 9, the term "balance" means that the chips 11A and 12B were placed opposite to each other at an angle of 180°.

As illustrated in FIG. 9, an optimum offset angle $\varphi_1$ differs depending on the turning conditions, and optimum conditions were observed when $\varphi_1=(1/4)\times\theta$. Note that the pitch angle difference $\Delta\theta$ calculated using the expression (1) is referred to as "$\theta$" in FIG. 9.

An optimum offset angle $\varphi_1$ was $\varphi_1=(1/2)\times\theta$ or $\varphi_1=(3/4)\times\theta$ depending on the diameter of the workpiece.

In a third experiment, swing turning was performed.

The third experiment was performed under the conditions described below (see FIG. 10). The workpiece W had a diameter of 50 mm and a length of 150 mm, and made of BsBM (free-cutting brass). The workpiece W was turned up to 100 mm from the end so as to have a diameter of 19 mm. The rotational speed of the main spindle 10 was set to 1,720/min, the feed speed was set to 172 mm/min, and the cut depth was set to 0.125 mm. The effect of the offset angle $\varphi_1$ and the swing angle $\Delta\varphi$ was determined under the above experimental conditions.

When the workpiece W was turned in a state in which the first cutting tool 11 and the second cutting tool 12 were placed opposite to each other at an angle of 180°, a chatter vibration occurred up to about 50 mm from the end of the workpiece W.

On the other hand, no chatter vibration occurred when the workpiece W was turned in a state in which the offset angle $\varphi_1$ was set to 3.3°, the frequency was set to 20 Hz, and the swing angle $\Delta\varphi$ was set to 1.4°.

Modifications of the invention are described below.

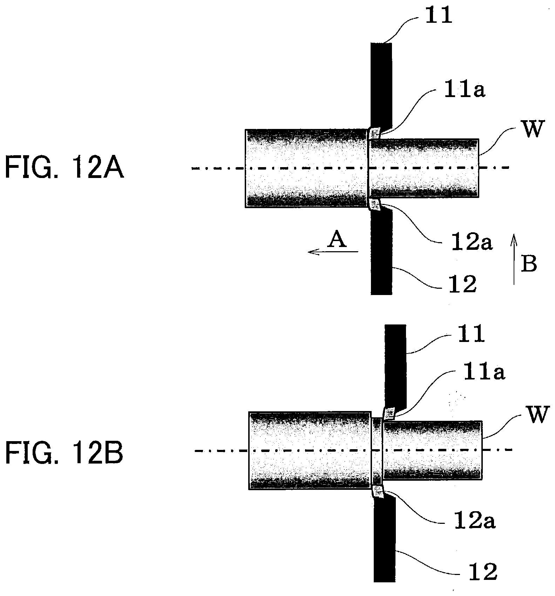

When implementing unequal pitch turning, the cut direction B and the feed direction A (feed position) may be set to be identical with respect to the first cutting tool 11 and the second cutting tool 12 (see FIG. 12A), or the feed position with respect to the workpiece W may be set to differ between the first cutting tool 11 and the second cutting tool 12 (see FIG. 12B).

In this case, the cut depth may be set to differ between the first cutting tool 11 and the second cutting tool 12.

Note that the first cutting tool 11 and the second cutting tool 12 may be identical to or different from each other as to the shape of the cutting tool.

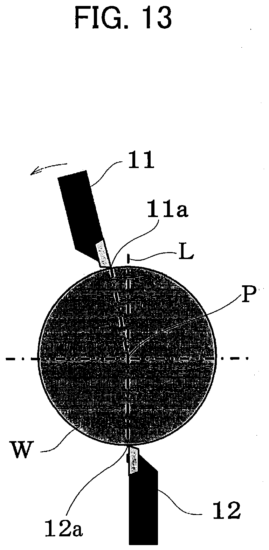

When implementing unequal pitch turning, the first cutting tool 11 may be moved linearly in the direction X and the Y (see FIG. 11) from the position at which the first cutting tool 11 and the second cutting tool 12 were placed opposite to each other at an angle of 180°, or a regenerative chatter vibration may be reduced or suppressed by changing the attitude of the first cutting tool 11 (see FIG. 13). In the example illustrated in FIG. 13, the attitude of the first cutting tool 11 is changed by swinging the first cutting tool 11 around the rotation center axis P. This also makes it possible to offset the edge 11a of the first cutting tool 11 by a given angle with respect to the reference line L.

**Claims**

1. A turning method comprising holding a workpiece (W) with a rotatable main spindle (10), and turning the workpiece (W) using a first cutting tool (11) and a second cutting tool (12),
**characterized in that**
a chatter vibration is detected when a workpiece (W) is held by the main spindle (10) and turned,
that it is determined whether or not the chatter vibration has occurred, that a frequency (fc) of the chatter vibration is calculated when determining that the chatter vibration has occurred, and that the workpiece (W) is turned in a state in which a first edge (11a) of the first cutting tool (11) is offset based on the frequency (fc) of the chatter vibration by a given offset angle ($\varphi$1) around a rotation center axis (P) with respect to a reference line (L) that connects the first edge (11a) and a second edge (12a) of the second cutting tool (12) when the first edge (11a) and the second edge (12a) are situated opposite to each other at an angle of 180° around the rotation center axis (P).

2. Turning method according to claim 1,
**characterized in that**
the workpiece (W) is turned using the first cutting tool (11) while swinging a first edge (11a) of the first cutting tool (11) within a range ($\Delta\varphi$) between offset angles ($\varphi$2 and $\varphi$3) with respect to the reference line (L) around the rotation center axis (P).

3. The turning method according to either claim 1 or 2,

**characterized in that**

the offset angle φ1 is calculated in accordance with the following formula :

$$\Delta\theta = 2\pi \left(m + \frac{1}{2}\right)\frac{n}{60fc}$$

wherein $f_c$ is the frequency of the chatter vibration and n is the rotational speed of the main spindle (10) and m is = 0 or a natural number, the offset angle φ1 is preferably in the range from (1/4)·Δθ to (3/4) Δθ.

4. The turning method as defined in claim 3,
wherein the workpiece (W) is turned using the first cutting tool (11) and the second cutting tool (12) in a state in which the second edge (12a) is offset by a given offset angle around the rotation center axis (P) with respect to the reference line (L).

5. The turning method as defined in any one of claims 1 to 4,
wherein the first edge (11a) is offset so that a clearance angle of the first edge (11a) does not become lower than a given angle.

6. A machine tool comprising a main spindle (10), first setting means, and second setting means, the first setting means setting a first cutting tool (11), the second setting means setting a second cutting tool (12), and the first cutting tool (11) and the second cutting tool (12) being situated opposite to each other around a rotation center axis (P) of the main spindle (10),
**characterized in that** the machine tool comprises:

detection means that detects a chatter vibration when a workpiece (W) is held by the main spindle (10), and turned;
determination means (S4) that determines whether or not the chatter vibration has occurred;
calculation means (S3, S4) that calculates a frequency of the chatter vibration when the determination means has determined that the chatter vibration has occurred; and
movement control means (S6) that controls movement of the first setting means based on the frequency of the chatter vibration calculated by the calculation means so that a first edge (11a) of the first cutting tool (11) is offset by a given offset angle (φ1) around the rotation center axis (P) with respect to a reference line (L) that connects the first edge (11a) and a second edge (12a) of the second cutting tool (12) when the first edge (11a) and the second edge (12a) are situated opposite to each other at an angle of 180° around the rotation center axis (P).

7. Machine tool according to claim 6,
**characterized in that**:
the movement control means (S9) controls movement of the first setting means based on the frequency of the chatter vibration calculated by the calculation means so that a first edge (11a) of the first cutting tool (11) swings within a range (Δφ) between offset angles (φ2 and φ3) with respect to the reference line (L) around the rotation center axis (P).

8. The machine tool as defined in claim 7, further comprising:
second movement control means (S6) that controls movement of the second setting means based on the frequency of the chatter vibration calculated by the calculation means so that a second edge (12a) of the second cutting tool (12) is offset by a given offset angle (φ1) around the rotation center axis (P) with respect to the reference line (L).

**Patentansprüche**

1. Drehverfahren mit einem Halten eines Werkstücks (W) mit einer drehbaren Hauptspindel (10) und Drehbearbeiten des Werkstücks (W) unter Verwendung eines ersten Schneidwerkzeugs (11) und eines zweiten Schneidwerkzeugs (12),
**dadurch gekennzeichnet,**
**dass** eine Ratterschwingung erfasst wird, wenn ein Werkstück (W) durch die Hauptspindel (10) gehalten und drehbearbeitet wird,
**dass** bestimmt wird, ob eine Ratterschwingung aufgetreten ist,

**dass** eine Frequenz (fc) der Ratterschwingung errechnet wird, wenn bestimmt ist,

**dass** die Ratterschwingung aufgetreten ist, und

**dass** das Werkstück (W) in einem Zustand drehbearbeitet wird, in welchem eine erste Kante (11a) des ersten Schneidwerkzeugs (11) basierend auf der Frequenz (11c) der Ratterschwingung um einen vorgegebenen Versatzwinkel ($\varphi_1$) um eine Drehmittenachse (P) mit Bezug auf eine Referenzlinie (L) versetzt wird, welche die erste Kante (11a) und eine zweite Kante (12a) des zweiten Schneidwerkzeugs (12) verbindet, wenn die erste Kante (11a) und die zweite Kante (12a) in einem Winkel von 180° um die Drehmittenachse (P) gegenüberliegend zueinander angeordnet sind.

2. Drehverfahren nach Anspruch 1,
   **dadurch gekennzeichnet,**
   **dass** das Werkstück (W) unter Verwendung des ersten Schneidwerkzeugs (11) drehbearbeitet wird, während eine erste Kante (11a) des ersten Schneidwerkzeuges (11) in einem Bereich ($\Delta\varphi$) zwischen den Versatzwinkeln ($\varphi_2$ und $\varphi_3$) mit Bezug auf die Referenzlinie (L) um die Drehmittenachse (P) verschwenkt wird.

3. Drehverfahren nach einem der Ansprüche 1 oder 2,
   **dadurch gekennzeichnet,**
   **dass** der Versatzwinkel $\varphi1$ gemäß der folgenden Formel berechnet wird:

$$\Delta\theta = 2\pi \, (m + 1/2) \, \frac{n}{60 \, fc} \, ,$$

   wobei fc die Frequenz der Ratterschwingung und n die Drehzahl der Hauptspindel (10) und m Null oder eine natürliche Zahl ist, und der Versatzwinkel $\varphi1$ vorzugsweise in einem Bereich von (1/4) mal $\Delta\theta$ ist (3/4) $\Delta\theta$ liegt.

4. Drehverfahren nach Anspruch 3,
   wobei das Werkstück (W) unter Verwendung des ersten Schneidwerkzeugs (11) und des zweiten Schneidwerkzeugs (12) in einem Zustand drehbearbeitet wird, in welchem die zweite Kante (12a) um einen vorgegebenen Versatzwinkel um die Drehmittenachse (P) mit Bezug auf die Referenzlinie (L) versetzt wird.

5. Drehverfahren nach einem der Ansprüche 1 bis 4,
   wobei die erste Kante (11a) versetzt wird, so dass ein Freiwinkel der ersten Kante (11a) nicht kleiner wird als ein vorgegebener Winkel.

6. Werkzeugmaschine mit einer Hauptspindel (10), einer ersten Einstelleinrichtung, einer zweiten Einstelleinrichtung, wobei die erste Einstelleinrichtung ein erstes Schneidwerkzeug (11) einstellt, die zweite Einstelleinrichtung ein zweites Schneidwerkzeug (12) einstellt und das erste Schneidwerkzeug (11) und das zweite Schneidwerkzeug (12) um einen Drehmittenachse (P) der Hauptspindel (10) zueinander gegenüberliegend angeordnet sind,
   **dadurch gekennzeichnet,**
   **dass** die Werkzeugmaschine weiter aufweist:

   - eine Erfassungseinrichtung, welche einer Ratterschwingung erfasst, wenn das Werkstück (W) durch die Hauptspindel (10) gehalten ist und drehend bearbeitet wird,
   - eine Bestimmungseinrichtung (S4), welche bestimmt, ob eine Ratterschwingung aufgetreten ist,
   - eine Berechnungseinrichtung (S3, S4), welche eine Frequenz der Ratterschwingung errechnet, wenn die Bestimmungseinrichtung bestimmt hat, dass eine Ratterschwingung aufgetreten ist, und
   - eine Bewegungssteuereinrichtung (S6), welche eine Bewegung der ersten Stelleinrichtung basierend auf der Frequenz der Ratterschwingung, welche durch die Berechnungseinrichtung errechnet wird, steuert, so dass eine erste Kante (11a) des ersten Schneidwerkzeugs (11) um einen vorgegebenen Versatzwinkel ($\varphi1$) um die Drehmittenachse (P) mit Bezug auf eine Referenzlinie (11) versetzt ist, welche die erste Kante (11a) und eine zweite Kante (12a) des zweiten Schneidwerkzeugs (12) verbindet, wenn die erste Kante (11a) und die zweite Kante (12a) in einem Winkel von 180° um die Drehmittenachse (P) gegenüberliegend zueinander angeordnet sind.

7. Werkzeugmaschine nach Anspruch 6,
   **dadurch gekennzeichnet,**
   **dass** die Bewegungssteuereinrichtung (S9) eine Bewegung der ersten Verstelleinrichtung basierend auf der Frequenz der Ratterschwingung, welche durch die Berechnungseinrichtung errechnet ist, steuert, so dass die erste Kante (11a) des ersten Schneidwerkzeuges (11) innerhalb eines Bereiches Δφ zwischen den Versatzwinkeln (φ2 und φ3) mit Bezug auf die Referenzlinie (11) um die Drehmittenachse (P) verschwenkt wird.

8. Werkzeugmaschine nach Anspruch 7,
welche weiter aufweist:

- eine zweite Bewegungssteuereinrichtung (S6), welche eine Bewegung der zweiten Verstelleinrichtung basierend auf der Frequenz der Ratterschwingung, welche durch die Berechnungseinrichtung errechnet wird, steuert, so dass eine zweite Kante (12a) des zweiten Schneidwerkzeuges (12) um einen vorgegebenen Versatzwinkel (φ1) um die Drehmittenachse (P) mit Bezug auf die Referenzlinie (11) versetzt wird.

**Revendications**

1. Procédé de tournage comprenant le maintien d'une pièce à usiner (W) avec une broche principale rotative (10), et le tournage de la pièce à usiner (W) en utilisant un premier outil de coupe (11) et un second outil de coupe (12),
**caractérisé en ce que**
une vibration de broutement est détectée lorsqu'une pièce à usiner (W) est maintenue par la broche principale (10) et tournée,
qu'il est déterminé si oui ou non la vibration de broutement s'est produite,
qu'une fréquence (fc) de la vibration de broutement est calculée lors de la détermination que la vibration de broutement s'est produite, et
que la pièce à usiner (W) est tournée dans un état dans lequel une première arête (11a) du premier outil de coupe (11) est décalée sur la base de la fréquence (fc) de la vibration de broutement d'un angle de décalage donné (φ1) autour d'un axe de centre de rotation (P) par rapport à une ligne de référence (L) qui raccorde la première arête (11a) et une seconde arête (12a) du second outil de coupe (12) lorsque la première arête (11a) et la seconde arête (12a) sont situées à l'opposé l'une de l'autre selon un angle de 180° autour de l'axe de centre de rotation (P).

2. Procédé de tournage selon la revendication 1,
**caractérisé en ce que**
la pièce à usiner (W) est tournée en utilisant le premier outil de coupe (11) tout en faisant osciller une première arête (11a) du premier outil de coupe (11) dans une plage (Δφ) entre des angles de décalage (φ2 et φ3) par rapport à la ligne de référence (L) autour de l'axe de centre de rotation (P).

3. Procédé de tournage selon la revendication 1 ou 2,
**caractérisé en ce que**
l'angle de décalage φ1 est calculé selon la formule suivante :

$$\Delta\theta = 2\pi \left( m + \frac{1}{2} \right) \frac{n}{60 fc}$$

dans lequel fc est la fréquence de la vibration de broutement et n est la vitesse de rotation de la broche principale (10) et m est = 0 ou un nombre naturel, l'angle de décalage φ1 est de préférence dans la plage de $(1/4).\Delta\theta$ à $(3/4)\,\Delta\theta$.

4. Procédé de tournage selon la revendication 3,
dans lequel la pièce à usiner (W) est tournée en utilisant le premier outil de coupe (11) et le second outil de coupe (12) dans un état dans lequel la seconde arête (12a) est décalée d'un angle de décalage donné autour de l'axe de centre de rotation (P) par rapport à la ligne de référence (L).

5. Procédé de tournage selon l'une quelconque des revendications 1 à 4,
dans lequel la première arête (11a) est décalée de sorte qu'un angle de dépouille de la première arête (11a) ne devienne pas inférieur à un angle donné.

6. Machine-outil comprenant une broche principale (10), un premier moyen de réglage, et un second moyen de réglage, le premier moyen de réglage réglant un premier outil de coupe (11), le second moyen de réglage réglant un second outil de coupe (12), et le premier outil de coupe (11) et le second outil de coupe (12) étant situés à l'opposé l'un de l'autre autour d'un axe de centre de rotation (P) de la broche principale (10),
**caractérisée en ce que** la machine-outil comprend :

un moyen de détection qui détecte une vibration de broutement lorsqu'une pièce de travail (W) est maintenue par la broche principale (10), et tournée ;
un moyen de détermination (S4) qui détermine si oui ou non la vibration de broutement s'est produite ;
un moyen de calcul (S3, S4) qui calcule une fréquence de la vibration de broutement lorsque le moyen de détermination a déterminé que la vibration de broutement s'est produite ; et
un moyen de commande de mouvement (S6) qui commande le mouvement du premier moyen de réglage sur la base de la fréquence de la vibration de broutement calculée par le moyen de calcul de sorte qu'une première arête (11a) du premier outil de coupe (11) soit décalée d'un angle de décalage donné ($\varphi$1) autour de l'axe de centre de rotation (P) par rapport à une ligne de référence (L) qui raccorde la première arête (11a) et une seconde arête (12a) du second outil de coupe (12) lorsque la première arête (11a) et la seconde arête (12a) sont situées à l'opposé l'une de l'autre selon un angle de 180° autour de l'axe de centre de rotation (P).

7. Machine-outil selon la revendication 6,
**caractérisée en ce que** :
le moyen de commande de mouvement (S9) commande le mouvement du premier moyen de réglage sur la base de la fréquence de la vibration de broutement calculée par le moyen de calcul de sorte qu'une première arête (11a) du premier outil de coupe (11) oscille dans une plage ($\Delta\varphi$) entre des angles de décalage ($\varphi$2 et $\varphi$3) par rapport à la ligne de référence (L) autour de l'axe de centre de rotation (P).

8. Machine-outil selon la revendication 7, comprenant en outre :
un second moyen de commande de mouvement (S6) qui commande le mouvement du second moyen de réglage sur la base de la fréquence de la vibration de broutement calculée par le moyen de calcul de sorte qu'une seconde arête (12a) du second outil de coupe (12) soit décalée d'un angle de décalage donné ($\varphi$1) autour de l'axe de centre de rotation (P) par rapport à la ligne de référence (L).

# FIG. 1

FIG. 2A

FIG. 2B

FIG. 2C

FIG. 3

S1 — START TURNING

S2 — CUTTING LOAD INFORMATION FROM ACCELERATION SENSOR OR OBSERVER

S3 — FREQUENCY ANALYSIS

S4 — HAS FREQUENCY COMPONENT EXCEEDED THRESHOLD VALUE? — No

‹UNEQUAL PITCH TURNING› — Yes

S5 — CALCULATE OPTIMUM PITCH ANGLE Δθ

S6 — CALCULATE X AND Y THAT CORRESPOND TO PITCH ANGLE DIFFERENCE
$X = r \cdot Cos(\Delta\theta/2)$
$Y = r \cdot Sin(\Delta\theta/2)$

‹SWING TURNING›

S8 — CHANGE BETWEEN OFFSET ANGLES $\phi_2$ AND $\phi_3$

S7-1 — DETERMINE PATH OF EDGE

S9 — CALCULATE X AND Y THAT CORRESPOND TO OFFSET
$X = r \cdot Cos(\phi_2, \phi_3)$
$Y = r \cdot Sin(\phi_2, \phi_3)$

S7-2 — TURN WORKPIECE ACCORDING TO DETERMINED PATH USING GIVEN PITCH ANGLE DIFFERENCE

S10-1 — TURN WORKPIECE WHILE MOVING EITHER OR BOTH OF EDGES

S10-2 — TURN WORKPIECE ACCORDING TO DETERMINED PATH WHILE SWINGING EDGE

S11 — END

## FIG. 4

# FIG. 5A

STATE OF SURFACE CONVEXITIES AND CONCAVITIES
TILT ANGLE: 0° (AS MEASURED FROM LOWER SIDE)
($\phi = 0°$)

OUTPUT FROM ELECTRIC MICROMETER ($\mu$m)

100μm

CHATTER VIBRATION OCCURRED

DISTANCE FROM END OF WORKPIECE (mm)

# FIG. 5B

20 mm FROM END

# FIG. 5C

40 mm FROM END

# FIG. 5D

60 mm FROM END

## FIG. 6A

STATE OF SURFACE CONVEXITIES AND CONCAVITIES
TILT ANGLE: 15° (AS MEASURED FROM LOWER SIDE)
($\phi = 15°$ )

OUTPUT FROM ELECTRIC MICROMETER ($\mu$m)

20μm

DISTANCE FROM END OF WORKPIECE (mm)

## FIG. 6B

TILT ANGLE: 15°
20 mm FROM END OF WORKPIECE

## FIG. 7A

SURFACE ROUGHNESS
TILT ANGLE: 30° (AS MEASURED FROM LOWER SIDE)
($\phi$ =30° )

**80μm**

CHATTER VIBRATION OCCURRED

DISTANCE FROM END OF WORKPIECE (mm)

OUTPUT FROM ELECTRIC MICROMETER ($\mu$ m)

## FIG. 7B

TILT ANGLE: 30°
20 mm FROM END OF WORKPIECE

# FIG. 8A

# FIG. 8B

# FIG. 9

TURNING RESULTS

EVALUATION
(CHATTER
VIBRATION)

| No. | DIAMETER OF WORKPIECE (mm) | CUT DEPTH (mm) | FEED RATE (mm/rev) | ROTA- TIONAL SPEED (min-1) | FREQUENCY OF CHATTER VIBRATION (Hz) | PITCH ANGLE DIFFERENCE (deg) | |
|---|---|---|---|---|---|---|---|
| 1 | 18.2 | 0.3 | 0.1 | 1200 | 732 | BALANCE | ✕ ✕ |
| 2 | 17.6 | 0.3 | 0.1 | 1200 | 800 | 2.44(1θ/2) | △ |
| 3 | 17.0 | 0.3 | 0.1 | 1200 | 740 | 2.44(1θ/2) | ✕ |
| 4 | 24.2 | 0.3 | 0.2 | 1200 | 778 | 2.31(1θ/2) | △ |
| 5 | 24.2 | 0.3 | 0.2 | 1200 | 740 | BALANCE | △ |
| 6 | 24.2 | 0.3 | 0.15 | 1200 | 653 | BALANCE | ✕ ✕ |
| 7 | 23.9 | 0.3 | 0.15 | 1200 | 735 | 2.76(1θ/2) | △ |
| 8 | 24.2 | 0.3 | 0.15 | 1200 | 796 | 4.13(3θ/4) | ○ |
| 9 | 24.2 | 0.3 | 0.15 | 1200 | DID NOT OCCUR | 1.38(1θ/4) | ◎ |
| 10 | 24.0 | 0.1 | 0.15 | 1200 | DID NOT OCCUR | 1.38(1θ/4) | ◎ |
| 11 | 23.8 | 0.1 | 0.15 | 1200 | 700~1000 | BALANCE | ✕ |
| 12 | 19.0 | 0.3 | 0.15 | 1200 | 603 | 1.38(1θ/4) | ✕ |
| 13 | 19.1 | 0.3 | 0.15 | 1200 | 598 | 1.49(1θ/4) | ✕ |
| 14 | 19.1 | 0.3 | 0.15 | 1200 | 593 | 4.47(3θ/4) | ○ |
| 15 | 19.0 | 0.4 | 0.15 | 1200 | 603 | 4.47(3θ/4) | ✕ |
| 16 | 19.0 | 0.3 | 0.15 | 1200 | 607 | BALANCE | ✕ ✕ |

FIG. 10

FIG. 11

FIG. 12A

11

11a

W

A

12a

B

12

FIG. 12B

11

11a

W

12a

12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5270941 A
- DE 112012000332 T5
- JP 2014079867 A
- JP 2014195856 A
- JP 2010271880 A